# EUROPÄISCHE PATENTANMELDUNG

(11) **EP 0 803 560 A1**
(43) Veröffentlichungstag der Anmeldung: **29.10.1997**
(21) Anmeldenummer: 96106686.7
(22) Anmeldetag: 26.04.1996
(51) Int. Cl.: C09K 17/46, C04B 41/45

(54) **Mittel und Verfahren zur Bodenverfestigung und zur Erzielung der Wasserundurchlässigkeit von Tiefbauobjekten**

(71) Anmelder: UTISOL Technologies AG, 6304 Zug (CH)
(72) Erfinder: Székely, Tamás, 1026 Budapest (HU); Martin, Ralf, 96515 Sonneberg (DE)
(74) Vertreter: von Füner, Alexander, Dr.

(57) **Zusammenfassung**

Die Erfindung betrifft ein Gemisch und ein Verfahren zur Bodenverfestigung und zur Erzielung der Wasserundurchlässigkeit von Tiefbauobjekten durch Gelbildung. Ein Gemisch bestehend aus Wasserglaslösung und einer nichttoxischen wasserlöslichen Chelatverbindung von einer oder mehreren, zwei- oder mehrwertigen Kationen wird in den Boden im einzelnen oder nacheinander bzw. in Form eines Gemisches der beiden Komponenten injiziert oder auf die Oberfläche der zu verfestigenden Objekten aufgebracht.

## Beschreibung

Die Erfindung betrifft ein Mittel und ein Verfahren zur Bodenverfestigung und zur Erzielung der Wasserdurchlässigkeit von Tiefbauobjekten.

Es ist bekannt, dass die Wasserundurchlässigkeit von Tiefbauobjekten häufig auf Grund der Abnutzung, Verkehrsbelastung und Alterung nicht mehr ausreichend ist. Die Verbesserung dieses Eigenschaftes ist meistens sehr aufwendig und häufig von geringem Erfolg.

Die getrennten oder gemeinsamen Anwendungen wässriger Alkalisilikatlösungen und Geliermittel ist seit langem bekannt. Dabei werden überwiegend solche Mittel verwendet, die sich der Silikatlösung ohne sofortige Gelbildung untermischen lassen und die erst nach einer für die Herstellung und Anwendung der Mischung ausreichende Zeit zur Gelbildung führen. Durch Injektieren dieser flüssigen, im Boden erstarrenden Gemische kann man erreichen, dass die Böden wasserundurchlässig und verfestigt werden. Wie erwähnt, es ist auch möglich, die verwendeten Lösungen vorher miteinander vermischen und diese Mischung noch vor der Gelierung in den Boden zu injizieren, wo diese sich nach Aushärtung der Mischung die Bodenbesandteile miteinander verbinden und ein festes, dichtes und wasserundurchlässiges Konglomerat bilden, dabei wird ein einheitliches Vermischen von Bodenbestandteilen und eine homogene Bildung des entstandene Gels angenommen. Ein solcher idealer Zustand kann der Praxis nicht erreicht werden.

Die verdünnten Wasserglaslösungen können in der Praxis mittels zweier Verbindungsklassen vernetzt werden. Durch einige Verbindungen, die in die erste Klasse gehören wird die Hydrolyse verschoben und das entstandene Kieselgel wirkt bodenverfestigend aus. Diese Wirkung kann durch alle Säuren, Säuresalze, hydrolisierende Salze und durch basenbindende organische Verbindungen z.B. Ester und Amine hervorgerufen werden. Solches Verfahren ist z.B. im DOS 2 242 713 (RHONE-PROGIL) beschrieben.
Die zweite Verbindungsklasse zum Vernetzen von Wasserglaslösungen umfasst zwei- oder mehrwertige Kationen, die mit hoher Reaktivität wasserunlösliche, harte Silikate oder andere feste Stoffe aus dem Silikatlösungen ausfallen und die ähnlich wie Kieselgel den Boden "zementieren", d.h. in ein festes Konglomerat umwandeln. Diese Konglomerate sind - abhängig von der Art und Weise des Injektierens - mehr oder weniger inhomogen. Ein weiterer Nachteil besteht darin, dass die entstandenen Gele äusserst unelastisch sind und den Bodenbewegungen nicht folgen können. Jene Quellfähigkeit der Gele, die zur Verdichtung benötigt ist, scheint zu gering.

Andere bekannte Verfahren werden durch den Einsatz von organischen Harzen und Gelen wie z.B. Aminoplaste, Acrylharze, Polyacrylamide, Polyurethane und Phenoplaste erzielt. Diese Gele besitzen eine gute Quellfähigkeit, ist jedoch ihre mechanische Festigkeit unzureichend; darüber hinaus ist ihre Herstellung kostspielig.

Es wurden auch Verfahren vorgeschlagen, die ein Vermischen oder eine Kombination zwei Gelarten vorsehen, dennoch kann ein homogenes Vermischen im Boden sogar durch technisch hochentwickelte Methoden nicht ausreichend realisiert werden.

Gemäss PCT/HU85/0002 Patentanmeldung wird ein Hydrogel mit einer guten Quellfähigkeit hergestellt, indem man im Boden einerseits durch Weckselwirkung zwischen einem Alkalisilikat und einer organischen Saure Kieselgel und andererseits gleichzeitig durch eine Reaktion eines Vinylpolimers mit einer Redox-Katalisator und mit einer Vernetzungmittel ein organisches Polymer herstellt. Um die gewünschte Vorteile erzielen zu können, müssen die zwei unterschiedlichen Gele gleichzeitig in den Boden gut miteinander vermischt werden oder gegebenenfalls ins Kanal, welches wasserdurchlässig wurde, eingebracht werden, sonst vermindert ein Überschuss der einen Komponente die Qualität der Gelmatrix und die Wechselwirkung mit dem Boden wird wesentlich beeinträchtigt. Aus den Beispielen der zitierten Patentschrift geht hervor, dass eine gute Vermischung zwischen den beiden Gelen durch starkes Verrühren entsteht und es ist zu erwarten, dass ein entsprechend günstiger Mischverlauf in Boden kaum erzielbar ist.

Man kann feststellen, dass ein geeignetes Vermischen der zwei Komponenten im allgemeinen nicht über den gesamten Querschnitt des zu behandelnden Boden oder Baukörpers sichergestellt werden.

Nach der EP 0345364 wird eine Methode beschrieben, wonach eine Qualitätsverminderung wegen Mangel der Durchmischung dadurch vermieden wird, dass zwei gelbildende Lösungen verwendet werden. Die erste ist eine Wasserglaslösung die zweite ein aus Kieselsol und einem organischen Lösungsmittel bestehendes Lösunggemisch, welches mit der alkalischen Wasserglaslösung reagieren kann. Die Verwendung eines solchen Kieselsols, die in einer organischen Flüssigkeit lösbar ist, scheint zu kostspielig sein.

Nach der europäischen Patentschrift 434274 (ELKEM) wird ein Mittel zur Verfestigung und/oder Wasserisolierung beschrieben, welches aus Löschkalk, Mikrosilikat und Alkalialuminat besteht.

Die moderne Erfordernisse des Umweltschutzes ernötigen den Einsatz vom bodenfremden Substanzen sofern als möglich zu minimieren. Sogar im Falle der Anwendung von nichttoxischen Kunststoffharzen entstehen makromolekulare Stoffe im Boden, die den organischen Verschmutzungsgrad des Grundwassers stark erhöhen und nach einer längerer Periode durch Biodegragation in toxischen Stoffe umwandeln. Ferner ist auch damit zu rechnen, dass die in den Boden eingetragenen Lösungsmittel Verunreinigungen des Grundwassers verursachen können.

Ziel der vorliegenden Erfindung ist gleichzeitig eine Bodenverfestigung und Wasserundurchlässigkeit des Bodens und/oder der Tiefbauobjekte auf eine umweltfreundliche Art ohne Einsatz von solchen Fremdstoffen zu realisieren, die eine wesentliche Kontamination des Bodens verursachen, d.h. keine Bodenverunreinigung oder Bodenbelastung hervorrufen. Ein weiteres Ziel der Erfindung war Lösungen mit nicht zu hoher Viskosität einzusetzen um bei der Injektierung der Mischungen keine mechanische Spannkrafte auszulösen.

Es wurde erkannt, dass wenn die Kationen, die mit den Silikatlösungen reagieren, in Chelatkomplexen überführt werden, erwirkt dies eine grundsätzliche Änderung des Reaktionsverlaufes. Einerseits wird die Reaktionsgeschwindigkeit der Reaktanten miteinender (d.h. Alkalisilikatlösung und Salze von zwei- oder mehrwertigen Kationen) wesentlich kleiner, andererseits werden die Eigenschaften der Reaktionsprodukte verändert. Beim Vermischen von einer Salzlösung (z.B. Kalciumklorid) mit Wasserglas entsteht ein Metallhydroxyd(z.B. Kalciumhydroxyd) und in dem Hydroxyd wird das bei der Hydrolyse entstandene Silicagel vermischt. Dieses Reaktionsgemisch ist zwar hart, besitzt aber nicht die vorteilhaften Eigenschaften eines Metallsilikates Verfährt man jedoch erfindungsgemäss, so kann man die Härte und die Zähigkeit des entstandenen Produktes durch die Chelatbindung wesentlich erhöhen, was einerseits durch die grössere Homogenität, andererseits durch die Silikatbildung hervorgerufen wird. Die Chelate bilden bei solchen pH-Werten, wo bereits die Hydroxyde sonst ausfallen würden, noch eine stabile Lösung.

Die Erniedrigung der Reaktionsgeschwindigkeit infolge der Chelatenbildung ist nicht nur deswegen vorteilhaft, da die Produkte der Reaktion viel günstigere Eigenschaften besitzen, sondern auch wegen technologischen Gründen. Die einfache Salzlösungen verursachen eine Fällung der Silikatlösung momentlich d.h. das Gemisch ist nicht mehr bearbeitbar (z.B. ungeeignet zum Injizieren). Vermischt man die Wasserglaslösung mit dem Chelatkomplex, dann kann die Gelierung für eine verhältnismässig lange Zeit verschoben werden, inzwischen kann die sich in der Reaktion befindende Lösung noch leicht auf verschiedene Art und Weise technisch weiterbehandelt (zerstreut, injiziert, aufgetragen) werden.

Die vorliegende Erfindung kann deshalb mit einem solchen Gemisch zur Bodenverfestigung und zur Erzielung der Wasserundurchlässigkeit von Tiefbauobjekten durch Gelbildung dadurch gekennzeichnet werden, dass es aus einem Gemisch von Wasserglaslösung und einer nichttoxischen wasserlöslichen Chelatverbindung von einer oder mehreren, zwei- oder mehrwertigen Kationen besteht, welches für die Injektierung in den Boden und/oder zur Aufbringung auf die Oberfläche eines Tiefbauobjektes geeignet ist. Der Kationbestandteil umfasst Erdalkalimetalle, Erdmetalle, Vanadium, Titan, Eisen, Mangan, Zink oder Zirconium, während als Ligandenbildner Di-, Tri- oder Polyamine, zwei- oder mehrwertige Alkohole, Sacharide, Zuckersäuren, Dikarbonsäuren, Hydroxy-Carbonsäuren, Aminosäuren und deren wasserlöslichen Derivate in wässriger und/oder säurer und/oder basischer Lösung dienen. Als Chelatbildner sind Ethylendiamin- Tetraessigsäure und deren Salze oder Acetyl-aceton bevorzugt.

Das erfindungsmässige Verfahren zur Bodenverfestigung und zur Erzielung der Wasserundurchlässigkeit von Tiefbauobjekten durch Gelbildung aus einer Alkalisilikatlösung, wird dadurch gekennzeichnet, dass eine in den Boden eingeführte (injizierte) oder auf die Oberfläche eines Tiefbauobjektes aufgebrachte Wasserglaslösung gleichzeitig oder nachträglich durch Injektion oder Auftragen mit einer nichttoxischer wasserlöslichen Chelatverbindung von einer oder mehreren, zwei- oder mehrwertigen Kationen in Kontakt gebracht wird. Weitere Merkmale des Verfahrens und die Reaktionspartner sind oben beschrieben.

Die erfindungsgemäss verwendeten Alkalisilikate sind Silikate oder Polysilikate (Natrium oder Kalium) bei welchen das Molverhältnis SiO₂/Alkalimetalloxyd 2-5, vorzugsweise 3,4 - 4 beträgt. Die Silikate werden in Form von wässrigen Lösungen enthaltend 15 - 45 Gew.% Feststoff eingesetzt.

Die Ligandenbildner sind Di-, Tri- oder Polyamine, zwei- oder mehrwertige Alkohole Sacharide, Zuckersäuren, Dikarbonsäuren, Hydroxy-Carbonsäuren, Aminosäuren in Form von wasserlöslichen Derivaten, welche sich in wässriger oder säurer und/oder basischer Lösung befinden. Bevorzugt sind Ethylendiamin-Tetraessigsäure und deren Salze und Acetylaceton.

Es ist anzunehmen, dass die Chelatbildner in Kontakt mit dem Boden und der Wasserglaslösung das gesteckte Ziel optimal verwirklichen, besonders bei einer entsprechenden Auswahl der meist geeigneten Komponenten und deren Konzentration.

Verfährt man gemäss der Erfindung so kann man feststellen, dass die eingesetzten Komponenten noch Stunden oder vielmehr tagelang nach der Einbringen im den Boden reagieren. Diese Langzeit-Reaktionen erwirken optimale bodenmechanische Eigenschaften. Die Folgereaktionen ermöglichen dass sich nach der Injektierung in Boden keine unerwünschten Spannungen entstehen und demzufolge keine Risse ausbilden können. Dadurch kann man in einem betreffenden Bodenquerschnitt mit kleinerem Aufwand der Chemikalien ein grössere technische Erfolg erzielt werden.

Die Erfindung wird an Hand der folgenden Beispiele näher erläutert:

### Beispiel 1

In einem 1 : 1 Verhältnis werden eine 20 Gew.%-ige Al₂SO₄)₃.18H₂O Lösung mit einer 17 Gew.%-igen Weinsäurelösung vermischt. Diese Lösung enthält genügend Überschuss an Liganden. Anschliessend wird die Lösung auf 20 Gew.% verdünnt und als Vernetzungsmittel angewendet. Einer 20 Gew.%-igen Natrium-Wasserglaslösung mit einem Molverhältnis vom SiO₂/Na₂O = 3,4 wird dem vorbereiteten Vernetzungsmittel durch Injektierung in den Boden zugeführt. Die Volumenverhältnisse der Reagentien werden auf 1 : 1 auf etwa eingestellt.

### Beispiel 2

Das Verfahren des Beispieles 1 wird mit dem Unterschied wiederholt, dass die Verdünnung der Chelatlösung anstatt Wasser mit einer 3 Gew.%-igen Essigsäurelösung durchgeführt wird.

### Beispiel 3

Die Zusammensetzung der Reagentien ist identisch mit Beispiel 1 und 2. Man verfährt derart, dass die zwei Reagentien während der Injektierung nicht vermischt werden, sondern der zu verfestigenden Boden zunächst mit der Wasserglaslösung, sodann mit der Chelatlösung impregniert wird. Diese Technik ist zur Abdichtung von schadhaften Kanälen besonders geeignet, gleichzeitig können die Bodenumgebung und damit die Einbettung der Kanäle auch verbessert werden.

### Beispiel 4

Eine Vernetzungslösung wird in ein Liter Wasser durch Lösen von 12 g CaCl₂4H₂O und 30 g Zitronensäure-Monohydrat bereitet. Die Lösung wird beim Zimmertemperatur 15-20 Stunden stehen gelassen. Demnach wird in eine Injektordüse mit einer 23 Gew.%-en Natriumsilikatlösung (Molverhältnis SiO₂/Na₂O = 2,9) auf eine Weise vermischt, dass das Volumenverhältnis zwischen der Vernetzungslösung und Wasserglaslösung 1:1,2 beträgt. Diese Mischung wurde auf bekannte Weise in den Boden injiziert. Die Aushärtung nach dem Vermischen beginnt in Abhängigkeit von der Temperatur in 2-3 Minuten und die Endhärte der Mischung wird in 2-3 Tagen erreicht.

### Beispiel 5

Eine Lösung von 20 g/Liter Trietanolamin und 30 g/Liter Eisen(III)-Chlorid wird vorbereitet. Diese Vernetzungslösung wird in einem Volumenverhältnis Vernetzer/Wasserglas von 1:1 bis 1:10 in den Boden injiziert. Die Bindezeit dieser Mischung in Abhängigkeit der Mischverhältnissen beträgt von einigen Sekunden bis 30 Minuten und demgemäss kann entweder das Gemisch in den Boden injiziert werden, oder die Lösungen werden nacheinander in einem zweistufigen Verfahren angewendet.

### Beispiel 6

Die Vernetzungslösung wird aus einer Natriumtartaratlösung (Konzentration 1 Mol/Liter) und aus Ti (IV)-Oxydhydrate bereitet in einem Molverhältnis von 1:1. Diese Komplexlösung kann entweder mit einer der obenerwähnten Methoden verarbeitet werden oder wird als Zusatzstoff anderen Metall-Chelaten zugegeben. Titan spielt hier die Rolle des Gerüstbildners und dieser Zusatz beeinflusst besonders die mechanischen Eigenschaften des Endproduktes. Bereits eine Beimischung von 1-5 Gew. % Titan-Chelat verringert die Sprödigkeit des Endproduktes.

## Patentansprüche

1. Gemisch zur Bodenverfestigung und zur Erzielung der Wasserundurchlässigkeit von Tiefbauobjekten durch Gelbildung dadurch gekennzeichnet, dass es aus einem Gemisch von Wasserglaslösung und einer nichttoxischen wasserlöslichen Chelatverbindung von einer oder mehreren, zwei- oder mehrwertigen Kationen besteht, welches für die Injektierung in den Boden und/oder zur Aufbringung auf die Oberfläche eines Tiefbauobjektes geeignet ist.

2. Ein Gemisch nach Anspruch 1, dadurch gekennzeichnet, dass der Kationbestandteil der Chelatverbindung, Erdalkalimetalle, Erdmetalle, Vanadium, Titan, Eisen, Mangan, Zink oder Zirkonium umfasst.

3. Ein Gemisch nach Anspruch 1, dadurch gekennzeichnet, dass die Chelatverbindung als Ligandenbildner Di-, Tri- oder Polyamine, zwei- oder mehrwertige Alkohole, Sacharide, Zuckersäuren, Dikarbonsäuren, Hydroxy-Carbonsäuren, Aminosäuren und deren wasserlöslichen Derivate in wässriger und/oder säurer und/oder basischer Lösung enthält.

4. Ein Gemisch nach Anspruch 2, dadurch gekennzeichnet, dass die Chelatbildner Ethylendiamin-Tetraessigsäure und deren Salze oder Acetyl-aceton sind.

5. Verfahren zur Bodenverfestigung und zur Erzielung der Wasserundurchlässigkeit von Tiefbauobjekten durch Gelbildung aus einer Alkalisilikatlösung, dadurch gekennzeichnet, dass eine in den Boden eingeführte (injizierte) oder auf die Oberfläche eines Tiefbauobjektes aufgebrachte Wasserglaslösung gleichzeitig oder nachträglich mit einer nichttoxischer wasserlöslichen Chelatverbindung von einer oder mehreren, zwei- oder mehrwertigen Kationen in Kontakt gebracht wird.

6. Verfahren nach Anspruch 5, dadurch gekennzeichnet, dass der Kationbestandteil der Chelatverbindung Erdalkalimetalle, Erdmetalle, Vanadium, Titan, Eisen, Mangan, Zink oder Zirconium während der Ligandenbildner derselben Di-, Tri- oder Polyamine, zwei- oder mehrwertige Alkohole, Sacharide, Zuckersäuren, Dikarbonsäuren,Hydroxy-Carbonsäuren, Aminosäuren und deren wasserlöslichen Derivate in wässriger und/oder säurer und/oder basischer Lösung sind.
